# EUROPÄISCHE PATENTSCHRIFT

(11) **EP 0 997 401 B1**
(45) Veröffentlichungstag und Bekanntmachung des Hinweises auf die Patenterteilung: **14.06.2006**
(21) Anmeldenummer: 99118904.4
(22) Anmeldetag: 24.09.1999
(51) Int. Cl.: B65G 1/04, B65G 1/02, B65G 1/137

(54) **Verfahren und Vorrichtung zur Handhabung von stückigem Gut, insbesondere von Arzneimitteln**
Method and apparatus for handling piece-formed material, especially medicaments
Procédé et dispositif de manipulation de matériel en morceaux, en particulier des médicaments

(30) Priorität: 30.09.1998 DE 19844896
(43) Veröffentlichungstag der Anmeldung: 03.05.2000
(73) Patentinhaber: Swisslog (Deutschland) GmbH, 71634 Ludwigsburg (DE)
(72) Erfinder: Lang, Hartmut, 73249 Wernau (DE)
(74) Vertreter: Rösler, Uwe

(56) Entgegenhaltungen:
- EP-A- 0 218 059
- EP-A- 0 431 823
- DE-A- 4 336 885
- DE-U- 9 319 655
- DE-U- 9 413 114
- FR-A- 2 160 722

## Beschreibung

Die Erfindung betrifft ein Verfahren und eine Vorrichtung zur Handhabung von stückigem, insbesondere kleinem Gut, insbesondere von in Behältern, wie z.B. Dosen, Flaschen oder dgl. Gefäßen, aufbewahrten Arzneimitteln, die zudem noch in Schachteln verpackt sein können, gemäß den Oberbegriffen der Ansprüche 1 und 11. Die Erfindung wird bevorzugt in Apotheken, Drogerien und dgl. Handelseinrichtungen eingestzt.

Derartige Einrichtungen sind aus der Praxis bekannt. Bei diesen Einrichtungen befinden sich parallel zu einer Regalwand am Boden und an der Decke je eine Führungsschiene. In diesen Führungsschienen fährt ein Manipulator. Der Manipulator besitzt je ein Führungssystem in der unteren und in der oberen Führungsschiene. Zwischen den beiden Führungssystemen befindet sich eine im wesentlichen senkrechte Führungssäule. An dieser Führungssäule ist eine - senkrecht zur Regalwand - verfahrbare Gut-Aufnahme angebracht. Der Manipulator ist im Stand der Technik rechnergesteuert. Die Regalwand ist zum Manipulator hin offen. Das stückige Gut liegt auf ebenen - im Arzneimittelbereich oftmals glasartigen - Flächen. Die Abstände des Stückgutes auf dem Regalboden, parallel zur Regalfront, werden beispielsweise durch Trennwände gebildet oder durch genaues Ausrichten des Stückgutes beim Bestücken auf dem Regalboden erzielt.

Die Gut-Aufnahme ist beispielsweise als waagerecht wirkende Greifzange ausgebildet. Eine andere Konstruktion der Gut-Aufnahme ist wie folgt aufgebaut: Eine verfahrbare Saugeinrichtung wirkt auf die Vorderfront des Gutes. Zwei umlaufende Bänder umfassen das Gut links und rechts. Durch Zusammenwirken der Saugeinrichtung und der Bänder wird das Gut auf eine, direkt vor dem Regal befindlichen, Platte der Gut-Aufnahme befördert.

Nach der so erfolgten Entnahme wird das Gut durch den Manipulator auf einem Ablageplatz oder einem weiteren Transportsystem abgelegt.

Bei einer anderen Entnahmevorrichtung werden mehrere Stückgüter nacheinander aus dem Regal entnommen, um erst danach abgelegt zu werden.

Diese Systeme haben verschiedene Nachteile. Zum einen muß das Gut sehr genau auf dem Regalboden ausgerichtet werden. Dabei sind nicht nur die waagerechten Abstände wesentlich, sondern auch die parallele Ausrichtung der Vorderfronten. Das Gut ist zwar fast immer in rechteckigen Schachteln verpackt, dennoch ist die Ausrichtung sehr schwierig und zeitaufwendig. Manche Schachteln sind sehr groß und enthalten beispielsweise eine schwere Glasflasche. Hier muß ein Greifer kräftig zufassen, um den zu entnehmenden Gegenstand sicher zu halten. Da der Greifer seine Kraft nur im Bereich der Mantellinie der Flasche wirksam aufbringen kann, besteht die Gefahr des Zerdrückens der Flasche. Wenn dagegen eine andere Schachtel sehr leicht ist, kann selbst bei einer vorwählbaren, kleineren Klemmkraft diese Schachtel zerquetscht werden.

Bei der Entnahme mittels eines Saugersystems kann die Wand der Schachtel verformt werden bzw. eine Schachtellasche aufgezogen werden.

Im Rahmen des allgemeinen Trends zur Vermeidung von Verpackungsmüll, wird auch in Zukunft im Arzneimittelbereich die Umverpackung - also die Schachtelverpackung um die eigentliche Arznei herum - zunehmend wegfallen. Der Beipackzettel wird dann direkt auf dem Arzneibehältnis angebracht werden. Somit wird es dann für Greifer- und Saugentnahmeeinrichtung zukünftig schwieriger, die Güter aus dem Regal zu entnehmen.

Beim Befüllen des Regales ist die Ausrichtung des Gutes von großer Bedeutung. Unabhängig von den Genauigkeitsanforderungen ist dieser Vorgang zur Zeit nicht maschinell zu erledigen. Damit ist menschliche Arbeitsleistung erforderlich, die sehr zeit- und kostenaufwendig ist. Um beim Befüllen der Regale nicht die Entnahme-Einrichtungen zu behindern, muß das Befüllen von der ebenfalls offenen Rückseite der Regale erfolgen. Dieses erfordert aber auch einen zusätzlichen, begehbaren Gang. Die rückseitige Befüllung beeinträchtigt aber auch wiederum die Genauigkeit der Ausrichtung des Gutes.

Ein weiterer Nachteil sind die geraden, in einer Ebene liegenden Regal-Vorderfronten. Hierdurch ergeben sich lange Fahrwege der Manipulatoren. Für ein Doppelspiel - d.h. ein Fahrweg zur Regalposition und wieder zurück - rechnet man ca. 12 Sekunden. Müssen z.B. für ein Rezept eines Kunden vier Arzneimittel zusammengestellt werden, so ergeben sich allein 48 Sekunden Zeitbedarf für die Kommissionierung (Zusammenstellung) einer Kundenanfrage.

In der EP 0 218 059 A1 ist ein Lagersystem beschrieben, bei dem die Stückgüter auf Paletten liegend bewegt und in ein Lager eingelagert bzw. aus dem Lager ausgelagert werden. So verfügt das bekannte Palettenlager über eine Tragsäule, an der beabstandet übereinander eine Vielzahl von Tragelementen vorgesehen ist. Die Paletten werden derart auf den Trägerelementen angeordnet, dass eine Vielzahl von Paletten verteilt um die Tragsäule auf einer Ebene gelagert werden können. Für das Ein- bzw. Auslagern von Stückgütern wird ein Gabelstapler benötigt, der mit der Gabel die Paletten von vorne oder von der Seite erfasst und anschließend die Palette gemeinsam mit dem darauf befindlichen Stückgut anhebt.

Die DE 43 36 885 A1 beschreibt eine Kommissionieranlage für Apothekenprodukte, mit einer Vielzahl von geneigt angeordneten Regalfächern, in denen Stückgüter gelagert werden können. Weiterhin ist eine in Längsrichtung und in der Höhe verfahrbare sowie in Querrichtung an die Sortierfächer anstellbare, motorisch angetriebene und computergesteuerte Greif- und Sammeleinrichtung vorgesehen, die in den einzelnen Regalgassen verfahren wird. Die Greifer sind derart um die Längsachse der Anordnung schwenkbar, dass ihre Lage dem Neigungswinkel der Sortierfächer angepasst werden kann. Um die Stückguter aus den Regalfächern zu entnehmen, werden zwei Verfahren beschrieben. Beim ersten Verfahren zum Auslagern wird lediglich eine an den Sammelfächern vorgesehene Klappe geöffnet, sobald die verfahrbare Greif- und Sammeleinrichtung vor dem Sammelfach zum Stillstand kommt. Anschließend rutscht das Gut ausschließlich auf Grund der Schwerkraft aus dem Regalfach in die Greif- und Sammeleinrichtung hinein. Das zweite Verfahren zum Auslagern eines Stückgutes sieht Regalfächer vor, die an der Vorderseite im Boden mittig eine sich von der Vorderkante in den Boden etwas hineinerstreckende Eingreiföffnung für einen Produktengreifer o. dgl. aufweisen.

Die FR 2 160 722 A beschreibt ein palettenloses Lagerungs- und Transportsystem, bei dem der Regalboden mit Ausnehmungen versehen ist, die derart korrespondierend zu den Fingern einer Gabelstaplergabel angeordnet sind, dass das Gut bei einer Auslagerung direkt auf der Gut-Aufnahme zu liegen kommt. Das Gut wird hierbei auf einer ebenen Auflagefläche, die von den erhabenen Bereichen des Regalbodens gebildet wird bereitgestellt. Bei dem Regalboden handelt es sich in diesem Fall somit um einen sprossenartig aufgebauten Regalboden, dessen erhabene Bereiche eine ebene Auflagefläche bilden, auf der das Gut zu liegen kommt.

Es ist deshalb Aufgabe der Erfindung ein System zu finden, das die oben beschriebenen Nachteile nicht mehr aufweist.

Diese Aufgabe wird durch ein Verfahren und eine Vorrichtung zur Handhabung von stückigem Gut, insbesondere von Arzneimittel, gemäß den Ansprüchen 1 und 11 gelöst; Weiterbildungen und Ausführungsvarianten der Erfindung werden in den nachgeordneten Ansprüchen 2 bis 10 sowie 12 bis 27 aufgezeigt.

Im Arzneimittelbereich ist Sauberkeit und Hygiene oberstes Gebot. Deshalb bestand ein technisches Vorurteil bisher darin, Regalböden nur aus einem ebenen und glatten Material herzustellen, damit man sie gut reinigen kann. Wegen diesen Gründen und der Überschaubarkeit des Regalinhaltes bestanden die Regalböden bisher überwiegend aus Glas.
Da zukünftig Umverpackungen mehr und mehr entfallen sollen, hat sich dieses Vorurteil bisher weiter festgesetzt. Zudem war es bisher auch aus ästhetischen und traditionellen Gründen undenkbar, diesen ebenen Flächen - seien sie aus Glas oder aus einem anderen Werkstoff - noch ein funktionales oder sogar ein technisches Aussehen zu geben.

Um jedoch die gestellte Aufgabe lösen zu können, mußte die bisher übliche Entnahmemethode mit Um- oder Übergreifen oder Ansaugen (pneumatisch oder magnetisch) nebst anschließendem, kraftschlüssigen Halten des stückigen Gutes verlassen werden.

Das neue Verfahren nebst Vorrichtung löst in hervorragender Weise die gestellte Aufgabe und sichert kurze Entnahmezeiten. Die verfahrensgemäß erzielten Vorteile werden zudem noch vorrichtungsgemäß fundiert sowie ausgebaut.
Ein Regalboden, der in neuer Art mit Vertiefungen in Form von Gassen oder mit Durchbrüchen in Form von Schlitzen versehen ist, die mindestens zur Entnahmefront des Regales, in der Regel dessen Vorderfront, offen sind, und der auch noch eine nichtebene Ober-/Auflagefläche aufweist, erfüllt einerseits dennoch die Erfordernisse des Arzneimittelbereiches und ermöglicht in Kombination mit der neuen Gestaltung des Manipulators zugleich eine schnellere Annäherung der Gut-Aufnhme an das zu entnehmende Gut.
Durch die neue Gestaltung des Regalbodens, insbesondere seiner Auflagefläche für das stückige Gut, sowie durch die neue Gut-Aufnahme, die mit zu den Vertiefungen korrespondierenden "Fingern" ausgestattet ist, sind für das Heranfahren des Manipulators und seiner Teile an die Position des Gutes gröbere Toleranzen beim Positionieren als bisher möglich; dieser Vorteil wirkt insbesondere positiv auf die Gesamt-Transportzeit für das Gut vom Regalfach bis zu einer vorgebbaren Position innerhalb der vorgesehenen Transportstrecke.

Durch die erfinderische Lösung ist das Gut sicher und schnell aus dem Regal heraushebbar; die Entnahme mit einer saugend oder klemmend wirkenden Vorrichtung, die mit den weiter vorn beschriebenen Gefahren und Unwägbarkeiten behaftet ist, entfällt.

Eine ebene Regalbodenfläche ist nicht unbedingt erforderlich. Positionsmulden für die Güter in dem Regalboden bewirken den Vorteil, daß die Güter eine definierte Regalposition haben, die speicher- und abrufbar ist.
Die vorzugsweise und im wesentlichen V-förmig ausgebildete Positionsmulde hat eine selbstzentrierende Funktion für die Güter, deshalb braucht das Gut (die Ware) bei der Bestückung des Regales nicht mehr extrem genau plaziert werden.

Dieser Vorteil bewirkt einen weiteren Vorteil: Die Bestückung kann nun auch durch einen, vorzugsweise den Manipulator erfolgen, der das Gut aus dem Regal entnimmt.
Durch Einsatz eines einfachen Magazines, welches beispielsweise beim Transport zwischen Großhändler und Apotheker immer wieder im Austausch ist, wird ein weiterer Zeit- und Kostenvorteil erreicht.

Da die Güter nun nicht mehr verrutschen können, ist es zudem auch möglich, diese in einer nach außen offenen, mit Fächern versehenen, Zylindermantelfläche unterzubringen, z.B. in einem sog. Säulenregal. Wird nun der Zylinder rechnergesteuert drehend positionierbar ausgeführt, so braucht der Manipulator nur noch senkrecht und radial zur Zylinderoberfläche zu verfahren.
Während bei einem Regal mit ebener Entnahmefront alle Bewegungen allein der Manipulator bewerkstelligen muß, "teilen" sich bei dieser erfindungsgemäßen Ausführung der Zylinder und der Manipulator die Wege. Etwaige Kräfte auf das Gut durch Beschleunigungs- oder Verzögerungskräfte durch die Zylinderdrehung bewirken wegen der vorzugsweise V-förmigen Ausformung der Mulde kein Verrutschen der Ware im Regalfach.

Im Rahmen der Erfindung ist aber auch daran gedacht, daß der Manipulator relativ kurze horizontale Wege, beispielsweise parallel entlang mehrerer Zylindermantelflächen, zurücklegen kann.
Der erfindungsgemäße Manipulator kann somit auch Zylinder und/oder ebene Regalwände bedienen.

Werden zwei Zylinder dicht nebeneinander aufgestellt, so kann ein Manipulator mit einer horizontal schwenkbaren Gut-Aufnahme, beide Zylinder bedienen. Die senkrechte Säule des Manipulators kann dabei ortsfest ausgeführt werden. Stehen mehr als zwei Zylinder nebeneinander und in jedem Zwickel zwischen den Zylindern steht ein Manipulator, so kann beim Ausfall eines Manipulators, der Nachbar-Manipulator diesen zugehörigen Zylinder ebenfalls bedienen.

Die einzelnen Regalmulden können gemäß der neuen Lösung unterschiedlich groß sein, mit einem insbesonders ganzzahligen Vergrösserungsfaktor.
Dies gilt besonders bei rautenförmigen Regalfächern, die durch sich kreuzende, schräg ansteigende Regalböden gebildet werden.

Die Vertiefungen oder Gassen können dabei einen rautenförmigen Querschnitt oder einen wellenförmigen oder einen zickzackförmigen Querschnitt aufweisen.

Die Erfindung wird folgend anhand von schematisch in Zeichnungen dargestellten, vorteilhaften Ausführungsbeispielen näher erläutert. Es zeigen:
- Figur 1: einen Querschnitt durch eine Gut-Aufnahme mit Schlitzen und durch eine Regalmulde mit Schlitzen, entlang der Schnittlinie A-A in Figur 2,
- Figur 2: eine Draufsicht zu Figur 1,
- Figur 3: einen Querschnitt durch eine Gut-Aufnahme mit Noppen und durch eine Regalmulde mit Schlitzen, entlang der Schnittlinie B-B in Figur 4,
- Figur 4: eine Draufsicht zu Figur 3,
- Figur 5: einen Querschnitt durch eine Gut-Aufnahme mit Schlitzen und durch eine Regalmulde mit Noppen, entlang der Schnittlinie C-C in Figur 6,
- Figur 6: eine Draufsicht zu Figur 5,
- Figur 7: eine stirnseitige Ansicht einer Mehrfach-Gut-Aufnahme,
- Figur 8: einen Manipulator mit Gut-Zylinder,
- Figur 9: eine reihenförmige Anordnung von Gut-Zylindern mit Manipulatoren,
- Figur 10: eine zentrale Anordnung eines Manipulators zwischen vier Gut-Zylindern,
- Figur 11: eine spezielle Ausgestaltung der in Figur 5 und 6 beschriebenen Ausführungsform und
- Figur 12: ein Ausführungsbeispiel mit einer ebenen, geneigten Auflagefläche für Güter sowie eine zugeordnete Gut-Aufnahme.

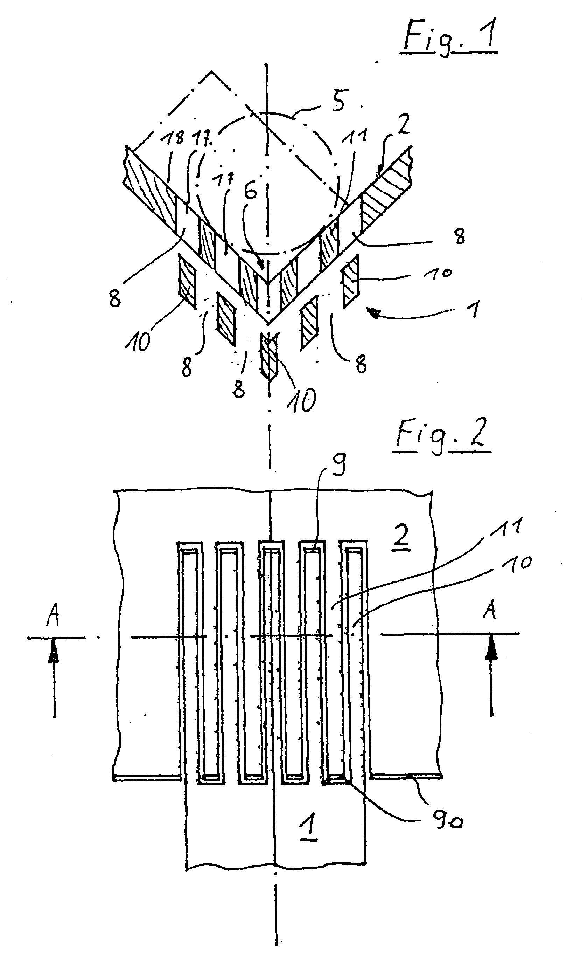

In der Figur 1 ist ein Querschnitt durch die geschlitzte Gut-Aufnahme 1 und die geschlitzte Regalmulde 2 einer Ausführungsvariante der neuen Vorrichtung gezeigt. Beide Teile haben einen im wesentlichen V-förmigen Querschnitt. Bei der Entnahme des Gutes 5 (z.B. eine runde Flasche oder eine rechteckige Schachtel) fahren die Finger 10 der Gut-Aufnahme 1 von unten her durch jeweils einen der gezeigten Schlitze 8 der Regalmulde 2 hindurch. Das Gut 5 verlagert sich nun von den Fingern 11 der Regalmulde 2 auf die Finger 10 der Gut-Aufnahme 1. Damit das Gut 5 nicht aus der Regalmulde 2 oder aus der Gut-Aufnahme 1 herausrutschen kann, besitzen beide an ihren vorderen Außenkanten vorzugsweise Anschläge 9a bzw 9.

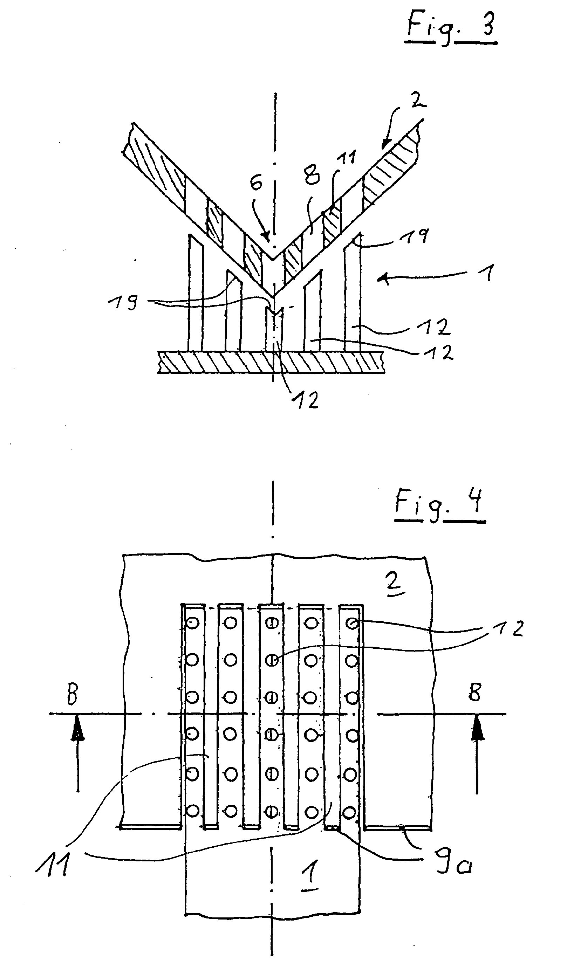

Die Figur 2 verdeutlicht durch ihre Draufsicht, wie die Finger 10 der Gut-Aufnahme 1 durch die durch Schlitze 8 gebildeten Durchbrüche der Regalmulde 2 hindurchkämmen.

Bei einer weiteren vorteilhaften Ausführungsvariante gemäß der Figur 3, wird die V-förmige Auflagefläche der Gut-Aufnahme 1 durch unterschiedlich lange Noppen 12, die auf einer gemeinsamen Platte 1a angeordnet sind, realisiert. Die freien Enden der Noppen 12 bilden Auflagepunkte 19, die aus Gründen der besseren Haftung des Gutes 5 profiliert, insbesondere im Sinne der V-Form angeschrägt sind. Die Noppen 12, die hier zudem vorzugsweise aus einem gummiartigen Material bestehen, hindern das Gut 5 bei der Entnahme am Rutschen. In der Regalmulde 2 sichert ein besagter Anschlag 9a das Gut.
Beim Heben bzw. Senken der Gut-Aufnahme 1 werden die Noppen 12, sinngemäß wie die Finger 10, durch die von Schlitzen 8 gebildeten Durchbrüche in der Regalmulde 2 zwischen deren Finger 11 hindurch geführt.

Zur Ergänzung der Darstellung gemäß Figur 3 zeigt die Figur 4 die reihenförmige, mit den Schlitzen 8 korrespondierende Anordnung der Noppen 12 auf der Platte 1a der Gut-Aufnahme 1.

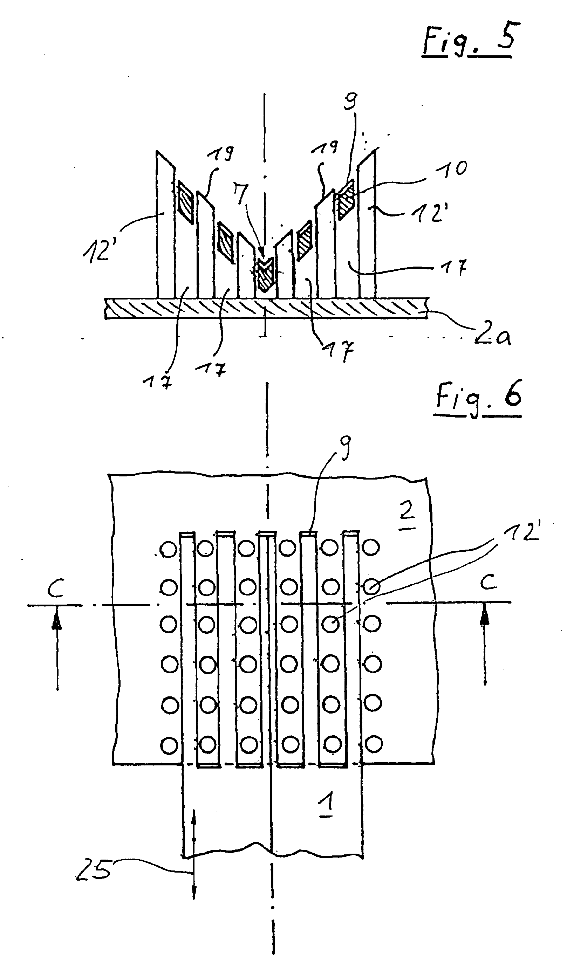

Im in den Figuren 5 und 6 gezeigten Ausführungsbeispiel ist die Anordnung der Noppen von der Gut-Aufnahme 1 auf die Regalmulde 2 verlagert worden, die Noppen sind mit 12' bezeichnet. Die Finger 10 der geschlitzten Gut-Aufnahme 1 werden hier, zur Entnahme des Gutes 5, zwischen die Grundplatte 2a der Noppen 12' und die durch die oberen Enden der Noppen 12' gebildete Auflagefläche der Regalmulde 2 verbracht und somit für die Entnahme unterhalb des Gutes 5 positioniert.

Ausgehend von den in den Figuren 3 bis 6 gezeigten Ausführungsbeispielen, können in Weiterbildung des Erfindergedankens die in Richtung der Entnahme- bzw. Bestückungs-Bewegung 25 angeordneten Noppen 12 oder 12' unter sich gemeinsam Stege bilden bzw. durch Stege ersetzt werden.

Eine weitere Ausführungsvariante besteht noch darin, daß die Regalmulden 2 derart geformt sind, daß mehrere Güter - bezogen auf die Vorderfront der Regalfläche - nebeneinander angeordnet sind, siehe hierzu die Figur 12. Die V-Form der Regalmulden 2, mit einem bevorzugten Winkel von 90° zwischen den Schenkeln, wurde vom Grunde her beibehalten, jedoch wurde hier ein Schenkel weiter zur Horizontalen geneigt und in seiner Länge für die Aufnahme mehrerer Güter 5 verlängert. Der andere nun steiler stehende Schenkel der V-förmigen Regalmulde ist in seiner Länge soweit gekürzt, daß dieser nur noch ein Anschlag 18a an der tiefsten Stelle der durch den anderen Schenkel gebildeten Auflagefläche 18 ist. Der lange, die Auflagefläche 18 bildende Schenkel der nun mehr L-förmigen Regalmulde ist auch hier mit Durchbrüchen in Form von Schlitzen 18 versehen und die zugeordnete Gut-Aufnahme 1 weist hier ebenfalls Finger 10 auf und ist der speziellen L-Form angepaßt. Der am tiefsten liegende Finger 10 dieser Gut-Aufnahme 1 ist seitlich mit einem kurzen Anschlag 10a versehen, mit dem das Herunterrutschen des Gutes 5, 5', 5'' verhindert wird.
Die Breite "B" der Gut-Aufnahme 1, d.h. die Anzahl der Finger 10, ist hier so gewählt, daß die Gut-Aufnahme 1 Güter 5, 5', 5'' unterschiedlicher Breite aufnehmen kann.
Damit nur das betreffende vordere Gut entnommen wird, ist die Gut-Aufnahme zusätzlich in Positionierrichtung "P" verschiebbar, so daß nur die benötigte Anzahl von Fingern 10 der Gut-Aufnahme 1 das jeweilige, zu entnehmende Gut 5, 5' oder 5'' untergreifen.
Zur Verdeutlichung wurde die Gut-Aufnahme 1 und das Gut 5' in der Figur 12 nochmals in gestrichelter Darstellung gezeichnet. Nach der Entnahme des vorderen, hier des Gutes 5 rutschen dann die nachfolgenden Güter 5', 5'' zum Anschlag 18a der Auflagefläche 18 vor.
Die Breiten der Schlitze 8 und der Finger 10 sind hier so aufeinander abgestimmt, daß die Gut-Aufnahme 1 zur Entnahme des Gutes 5, 5', 5'' eine im wesentlichen vertikal gerichtete Hubbewegung H ausführen kann. Die Gut-Aufnahme 1 ist jedoch im speziellen zusätzlich in mehreren Achsen schwenkbar am Manipulator 3 gehaltert.

Bei einer weiteren, in den Figuren nicht gezeigten Ausführungsvariante reichen die geneigten, nach hinten ansteigenden Regalmulden 2 in die Tiefe, so daß mehrere Güter hintereinander liegend angeordnet sind. Die Schlitze 8 sind hier gegenüber der Darstellung in Figur 12 um 90° gedreht, also von vorn nach hinten gerichtet, in der Regalmulde 2 angeordnet. In spezieller Ausbildung ist hier noch vorgesehen, daß der vordere, ein stückiges Gut 5 aufnehmende Abschnitt der hier gegenüber der Grundvariante längeren, geneigt liegenden Regalmulde 2 zumindest annähernd in die Horizontale abgewinkelt ist.
Bei einer Entnahme eines vorderen Gutes 5, rutschen die Nachfolgenden nach.
Um die Entnahme-Vorgänge zu realisieren, ist der Manipulator 3, insbesondere die Gut-Aufnahme 1 relativ zu dem am tiefsten Punkt der Regalmulde 2 liegenden Gut horizontal so positioniert, daß in Richtung der Regaltiefe die freien Enden der Finger 10 der Gut-Aufnahme 1 nach hinten nicht über das hintere Ende des aufzunehmenden Gutes hinausragen. Zudem ist die Gut-Aufnahme 1 in Weiterbildung vorzugsweise noch um mindestens eine Achse schwenkbar.

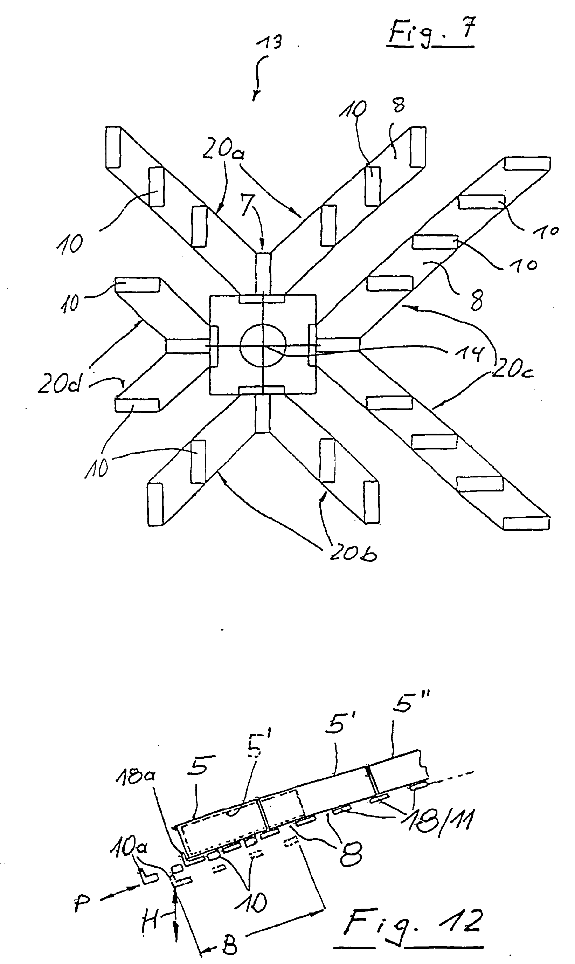

In der Figur 7 ist eine weitere Variante einer Gut-Aufnahme 1 eines Manipulators gezeigt. Hier ist eine sogenannte Mehrfach-Gut-Aufnahme 13, mit mehreren, in der Größe zueinander verschiedenen Gut-Aufnahmen 1, in Frontalansicht zu sehen. Die Mehrfach-Gut-Aufnahme 13 ist derart um eine im wesentlichen vertikal gerichtete Drehachse 14 schwenkbar, so daß die Hauptachse des vorzugsweise V-förmigen Querschnittes einer der vorgesehenen Gut-Aufnahmen 1 im wesentlichen senkrecht auf die, hier nicht dargestellte, Regal-Vorderfront weist. Mit Bezugeszeichen 20a, 20b, 20c, bzw. 20d sind die durch die jeweiligen Finger 10 gebildeten Auflageflächen bezeichnet
Die besagte Drehachse 14 kann, je nach konstruktiver Aufgabenstellung des Kunden, zugleich auch die Führungssäule 16 des Manipulators 3 sein.
Je nach Größe des Gutes 5 wird, durch Drehung der Mehrfach-Gut-Aufnahme 13 um die Drehachse 14, eine Gut-Aufnahmen 1 mit einer zur Größe des jeweiligen Gutes 5 geeigneten Größe in Arbeitsposition gebracht.
Zur Entnahme (entsprechendes gilt auch bei Bestükkung) eines Gutes 5 fährt die betreffende Gut-Aufnahme 1 parallel zur Drehachse 14 in Richtung zur Regalmulde 2 vor. Entweder allein durch diese Bewegung oder auch durch eine weitere Bewegung seitens des Manipulators 3, fährt die Gut-Aufnahme 1 unter das Gut 5. Die Drehbewegung der Mehrfach-Gut-Aufnahme 13 ist vorzugsweise rechnergesteuert.

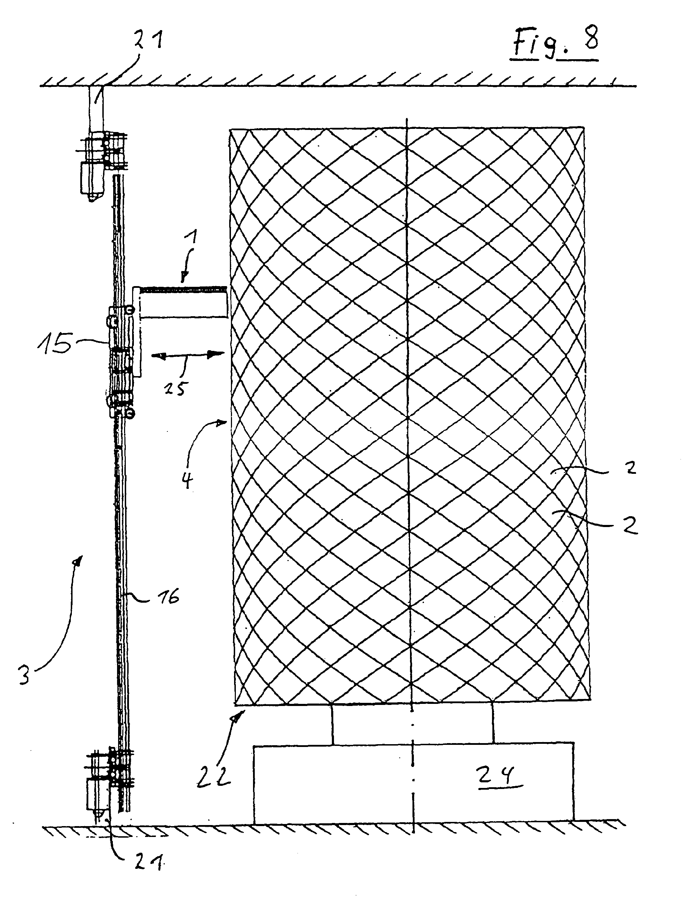

In der Figur 8 wird die Arbeitsweise eines Manipulators 3 in Verbindung mit einem Gut 5 speichernden Zylinder 22, dessen Mantelfläche die Regal-Vorderfront bildet, dargestellt.
Der Manipulator 3 kann mittels zweier Führungschienen 21, die beispielsweise an der Decke und am Boden angebracht sind, entlang einer Regal-Vorderfront 4 fahren.
In dem hier gezeigten Fall ist zwar nur die Regal-Vorderfront 4 eines einzelnen Zylinders 22 zu sehen, jedoch ist auch mindestens ein weiterer, hinter dem gezeigten angeordneter Zylinder 22 denkbar, der ebenfalls von dem parallel zur Regal-Vorderfront 4 verfahrbaren Manipulator 3 bedient wird.

Eine weitere, nicht dargestellte Ausführungsvariante sieht zudem vor, daß der Manipulators 3 neben einer ebenen, senkrechten Regal-Vorderfront auch mindestens ein Zylinder-Regal bedient.

Damit mehrere Entnahmen aus dem Regal gesammelt werden können, bevor sie zu einem Sammelplatz oder einem Transportsystem gebracht werden, befindet sich im Bereich der Gut-Aufnahme 1, vorzugsweise im Bereich ihrer Anbindung an die senkrechte Führungssäule 16, eine beliebige, nicht in den Figuren gezeigte Ablagefläche.

Zwischen den Führungsschienen 21 befindet sich die Führungssäule 16, an der eine vertikale Einheit 15 geführt wird. An der vertikalen Einheit 15 befindet sich die Gut-Aufnahme 1, die zur Entnahme aus dem Zylinder 22 oder zur Bestückung desselben, eine im wesentlichen horizontal gerichtete Bewegung 25 ausübt.
Die wabenartige Oberfläche des Zylinders 22 mit einer Vielzahl von Regalmulden 2 wird erreicht, indem kreuzweise Wendeln angelegt werden.
Eine andere Art dieser Regalmulden 2 für einen Zylinder 22 herzustellen ist die, runde Platten an ihrem Rand ähnlich einer Wellscheibe zu verformen. Der Zylinder 22 besitzt einen vorzugsweise rechnergesteuerten Drehantrieb 24. Somit braucht der Manipulator 3 nur noch die vertikale und die Bestükkungs- bzw. die Entnahmebewegung zu erledigen.

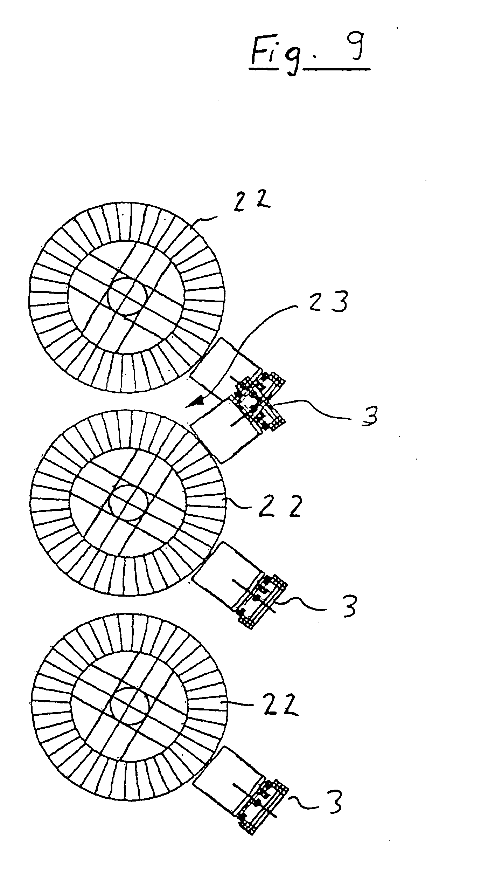

In der Figur 9 wird eine Ausführungsvariante mit einreihiger Anordnung von Zylindern 22 mit denen zugeordneten, ortsfesten Manipulatoren 3 gezeigt. Dabei ist der oben auf dem Zeichnungsblatt gezeigte Manipulator 3 auch mit einer zum mittleren Zylinder hin geschwenkten "Hilfestellung" gezeichnet. Wenn z.B. der mittlere Manipulator 3 ausfallen sollte, kann der obere Zylinder 22 beim 'Nachbar'-Zylinder 22 "aushelfen".

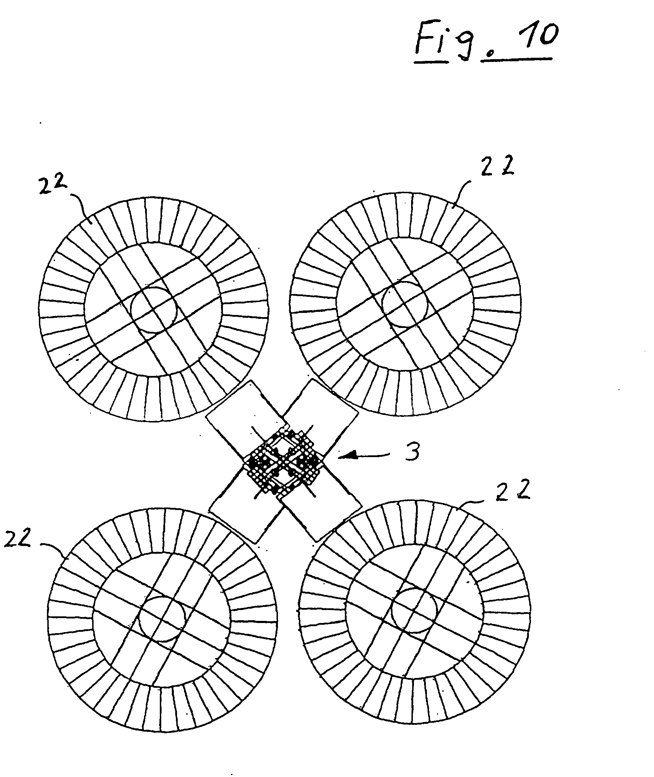

Die Weiterführung des Gedankens der "Hilfestellung" wird mit der Figur 10 veranschaulicht, nur das in dieser Figur von vorn herein ein Schwenkbetrieb des Manipulators 3 vorgesehen ist. Diese Anordnung kann sinnvoll sein, wenn z.B. eine geringe Entnahmehäufigkeit vorliegt, aber ein derart reichhaltiges Sortiment vorliegt, daß ein Zylinder allein nicht ausreicht.

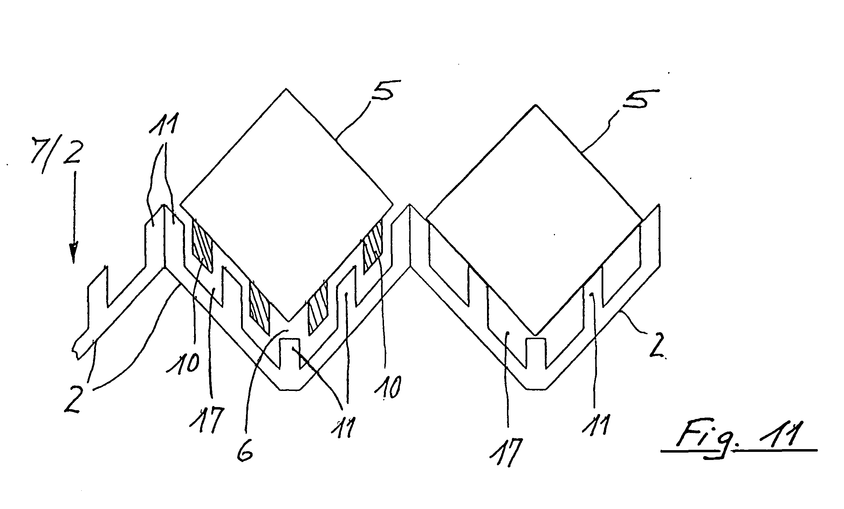

In der Figur 11 ist eine andere, zu der Ausführungsvariante gemäß den Figuren 5 und 6 analoge Weiterbildung der Erfindung dargestellt. Es werden hier als Ausschnitt eines Regales mehrere nebeneinander angeordnete Regalmulden 2 gezeigt. In der in dieser Figur rechts liegenden Regalmulde 2 ist das Gut 5 auf Finger 11 der Regalmulde abgelegt. In der links daneben befindlichen Regalmulde 2 ist das Gut 5 von den Fingern 10 der Gut-Aufnahme 1 bereits gehalten und zur Entnahme oder Aufgabe angehoben. Die Finger 10 der Gut-Aufnahme 1, die bei dieser Ausführungsvariante von der Regalvorderfront aus unter das Gut 5 verbracht wurden, liegen hier, in der Darstellung eines Momentes eines Entnahmezyklusses, innerhalb der Gassen 17 der Regalmulde 2; die Finger 10 der Gut-Aufnahme 1 und die Finger 22 der Regalmulde 2 greifen kammartig ineinander.
Durch seitliches verschieben der unmittelbar übereinander liegenden Reihen von Regalmulden um eine halbe Breite einer Regalmulde 2 sind eine Vielzahl von Regalmulden 2 sehr platzsparend in einer Regalebene anordbar.

Bei den Ausführungsvarianten gemäß den Figuren 1 und 2 sowie selbiger in Verbindung mit denen nach den Figuren 8 bis 10 kann die Entnahme von Güter 5 zudem noch zeitsparender dadurch erfolgen ,daß die Gut-Aufnahme 1 mehrere übereinander angeordnete Regalmulden 2 nacheinander vertikal durchläuft. Von Vorteil ist dabei noch eine Weiterbildung der Erfindung derart, daß die Finger der Gut-Aufnahme 1 zusätzlich in Richtung der Regaltiefe aus- und einfahrbar sind.

### Bezugszeichenliste

- 1: Gut-Aufnahme
- 1a: Platte
- 2: Regalmulde
- 2a: Grundplatte
- 3: Manipulator
- 4: Regal-Vorderfront
- 5,5',5'': Gut (Güter)
- 6: Muldenmitte
- 7: Aufnahmemitte
- 8: Schlitze
- 9: Anschlag (Anschläge an Pos. 11)
- 9a: Anschlag (Anschläge an Pos. 2)
- 10: Finger der Gut-Aufnahme
- 10a: Anschlag an Pos. 10
- 11: Finger der Regalmulde
- 12,12': Noppen
- 13: Mehrfach-Gut-Aufnahme
- 14: Drehachse
- 15: vertikale Einheit
- 16: Führungssäule
- 17: Gasse
- 18: Auflagefläche
- 18a: Anschlag an Pos. 18
- 19: Auflagepunkte
- 20a: Auflagefläche an der Mehrfach-Gut-Aufnahme
- 20b: Auflagefläche an der Mehrfach-Gut-Aufnahme
- 20c: Auflagefläche an der Mehrfach-Gut-Aufnahme
- 20d: Auflagefläche an der Mehrfach-Gut-Aufnahme

- 21: Führungsschiene
- 22: Zylinder
- 23: Zwickel
- 24: Drehantrieb
- 25: Entnahme- bzw. Bestückungs-Bewegung
- P: Positionierrichtung
- B: Breite
- H: Hubbewegung

## Patentansprüche

1. Verfahren zum Auslagern von stückigem Gut (5, 5', 5") in bzw. aus einem Regal mittels einer Gut-Aufnahme (1) eines relativ zum Regal parallel sowie quer beweglichen Manipulators (3), wobei das Regal einen Regalboden aufweist, der eine nicht ebene Ober- bzw. Auflagefläche und an einer definierten Position eine Regalmulde mit einem Durchbruch aufweist, in der das Gut bereitgestellt wird, und gegenüber der die Gut-Aufnahme (1) von der Regalvorderfront (4) aus durch den Durchbruch unter das Gut verbracht und derart angehoben wird, dass das Gut gemeinsam mit der Gut-Aufnahme (1) nach vorne aus dem Regal heraus bewegt wird,
**dadurch gekennzeichnet,**
- **dass** das Gut (5, 5', 5") in der vorzugsweise V-förmig ausgebildeten Regalmulde (2) derart bereitgestellt wird, dass das Gut (5, 5', 5") eine Zentrierung in Längs- oder Umfangsrichtung des Regals erfährt, und
- **dass** die Gut-Aufnahme (1) durch eine Mehrzahl von im Bereich der Regalmulde (2) vorgesehenen Vertiefungen und/oder Durchbrüchen (17) unter das Gut (5, 5', 5") verbracht und derart angehoben wird, dass das Gut (5, 5', 5") auf der Gut-Aufnahme (1) zu liegen kommt.

2. Verfahren nach Anspruch 1,
**dadurch gekennzeichnet, dass**
die Gut-Aufnahme (1) unter das Gut (5, 5', 5") verbracht wird, indem sie zwischen die Regalmulde (2) und das Gut (5, 5', 5") horizontal eingeschoben wird.

3. Verfahren nach Anspruch 1,
**dadurch gekennzeichnet, dass**
die Gut-Aufnahme (1) unter das Gut (5, 5 ',5") verbracht wird, indem sie von unten nach oben die Regalmulde (2) durchläuft.

4. Verfahren nach einem der vorhergehenden Ansprüche,
**dadurch gekennzeichnet, dass**
das Einlagern im umgekehrten Ablauf wie das Auslagern geschieht.

5. Verfahren nach einem der vorhergehenden Ansprüche,
**dadurch gekennzeichnet, dass**
das Einlagern auch von der Vorderseite des Regales (4) her geschieht.

6. Verfahren nach einem der vorhergehenden Ansprüche, insbesondere zum Ein- und Auslagern,
**dadurch gekennzeichnet, dass**
die Parallelbewegung zwischen Regal und Manipulator (3) durch Bewegung des Regales, insbesondere durch Rotation eines runden Regales (22), erzielt wird.

7. Verfahren nach einem der vorhergehenden Ansprüche,
**dadurch gekennzeichnet, dass**
beim Auslagern mehrerer stückiger Güter (5, 5', 5"), welche häufig in dieser Kombination benötigt werden, der Gutaufnehmer (1) des Manipulators (3) mehrere Regalmulden (2) nacheinander vertikal durchläuft.

8. Verfahren nach einem der vorhergehenden Ansprüche,
**dadurch gekennzeichnet, dass**
bei mehreren in einer Regalmulde (2) eingelegten Gütern (5, 5', 5") diese so eingelegt sind, dass die Güter (5, 5', 5") zum Tiefpunkt der Regalmulde (2) hin nachrutschen können.

9. Verfahren nach Anspruch 8,
**dadurch gekennzeichnet, dass**
sich das zweite und die folgenden Güter (5, 5', 5") nur in Richtung des insbesondere schräg nach hinten ansteigenden Muldenverlaufes an dem am tiefsten Punkt der Regalmulde (2) liegenden Gut (5, 5', 5") anschließen und für das Auslagern der Manipulator (3) relativ zu dem am tiefsten Punkt der Regalmulde (2) liegenden Gut (5, 5', 5") horizontal so positioniert ist, dass in Richtung der Regaltiefe die freien Enden der Finger (10) der Gut-Aufnahme (1) nach hinten nicht über das hintere Ende des aufzunehmenden Gutes (5, 5', 5") hinausragen.

10. Verfahren nach Anspruch 8,
**dadurch gekennzeichnet, dass**
sich das zweite und die folgenden Güter (5, 5', 5") nur auf einer Seite des Muldenverlaufes an dem am tiefsten Punkt der Regalmulde (2) liegenden Gut (5, 5', 5") anschließen und für das Auslagern der Manipulator (3) relativ zu dem am tiefsten Punkt der Regalmulde (2) liegenden Gut (5, 5', 5") horizontal so positioniert ist, dass in Richtung des zweiten und der folgenden Güter (5, 5', 5") die Seitenkante des Manipulators (3) nicht über das auf zunehmende Gut (5, 5', 5") hinaus ragt.

11. Vorrichtung zur Durchführung des Verfahrens nach mindestens einem der Verfahrensansprüche
- mit einem Regal, das einen Regalboden vorsieht, der eine nicht ebene Ober- bzw. Auflagefläche und an wenigstens einer definierten Position eine Regalmulde (2) mit einem Durchbruch aufweist, sowie
- einem Manipulator (3) mit einer Gut-Aufnahme (1) zum Ein- und Auslagern von stückigem Gut im bzw. aus dem Regal, wobei die Gutaufnahme durch den Durchbruch unter das Gut (5, 5', 5") verbringbar und derart anhebbar ist, dass das Gut gemeinsam mit der Gut-Aufnahme (1) nach vorne aus dem Regal heraus bewegbar ist,
**dadurch gekennzeichnet, dass** die Regalmulde derart, vorzugsweise V-förmig, ausgebildet ist, dass die Regalmulde eine Zentrierung des Gutes in Längs- oder Umfangsrichtung des Regals bewirkt,
dass in der Regalmulde eine Mehrzahl von Vertiefungen und/oder Durchbrüchen (17) vorgesehen ist und dass die Gut-Aufnahme (1) derart unter das Gut (5, 5', 5") verbringbar und anhebbar ist, dass das Gut (5, 5', 5") auf der Gut-Aufnahme (1) zu liegen kommt.

12. Vorrichtung nach einem der vorhergehenden Vorrichtungsansprüche,
**dadurch gekennzeichnet, dass**
die Regalmulde (2) zur Vorderfront hin offene Vertiefungen (17) aufweist und die Gut-Aufnahme (1) aus Fingern (10) besteht, deren Abstand und Dimension den Vertiefungen (17) der Regalmulde (2) entspricht.

13. Vorrichtung nach einem der vorhergehenden Vorrichtungsansprüche,
**dadurch gekennzeichnet, dass**
die Regalmulde (2) sich bis zur Vorderfront erstreckende, die Regalmulde (2) vollständig durchsetzende Schlitze (8) aufweist und die Gut-Aufnahme (1) des Manipulators (1) aus Fingern (10) besteht, deren Abstand und Dimension den Schlitzen (8) der Regalmulde (2) entspricht.

14. Vorrichtung nach einem der vorhergehenden Vorrichtungsansprüche,
**dadurch gekennzeichnet, dass**
der Manipulator (3) parallel zur Vorderfront (4) des Regales verfahrbar angeordnet ist.

15. Vorrichtung nach einem der vorhergehenden Vorrichtungsansprüche,
**dadurch gekennzeichnet, dass**
ein senkrecht zu einer Auflagefläche der Regalmulde (2) und/oder der Gut-Aufnahme (1) verlaufender Querschnitt V-förmig ausgebildet ist.

16. Vorrichtung nach einem der vorhergehenden Vorrichtungsansprüche,
**dadurch gekennzeichnet, dass**
die Regalmulde (2) und/oder die Gut-Aufnahme (1) - im Verhältnis zur Grösse der einzelne Vertiefungen und/oder Durchbrüche (17) - kleinflächige Auflagepunkte (19) aufweist.

17. Vorrichtung nach einem der vorhergehenden Vorrichtungsansprüche,
**dadurch gekennzeichnet, dass**
die Regalmulde (2) und/oder die Gut-Aufnahme (1), eine rutschhemmende Oberfläche aufweist.

18. Vorrichtung nach einem der vorhergehenden Vorrichtungsansprüche,
**dadurch gekennzeichnet, dass**
die Regalmulde (2) an ihrer Vorderfront einen Anschlag (9a, 18a) für das Gut (5) aufweist.

19. Vorrichtung nach einem der vorhergehenden Vorrichtungsansprüche,
**dadurch gekennzeichnet, dass**
die Gut-Aufnahme (1) verschiedene Auflageflächen (20a,b,c,d) besitzt, die um eine waagerechte Achse (14) drehbar gelagert sind.

20. Vorrichtung nach einem der vorhergehenden Vorrichtungsansprüche,
**dadurch gekennzeichnet, dass**
mindestens eine Auflagefläche (18) der Gut-Aufnahme (1) derart um eine vertikale Achse, insbesondere eine Führungssäule (16), schwenkbar ist, so dass die Hauptachse des V-förmigen Querschnittes der Auflagefläche im wesentlichen senkrecht auf die Regal-Vorderfront (4) weist.

21. Vorrichtung nach einem der vorhergehenden Vorrichtungsansprüche,
**dadurch gekennzeichnet, dass**
die Gut-Aufnahme (1) eine Ablagefläche, insbesondere im Bereich ihrer Anbindung an die Führungssäule (16), besitzt.

22. Vorrichtung nach einem der vorhergehenden Vorrichtungsansprüche,
**dadurch gekennzeichnet, dass**
das Regal mindestens ein stehender, drehbarer, insbesondere rechnergesteuerter Zylinder (22) ist und die Regal-Vorderfront (4) durch ein Mantelfläche des Zylinders gebildet wird.

23. Vorrichtung nach einem der vorhergehenden Vorrichtungsansprüche,
**dadurch gekennzeichnet, dass**
die Regalmulden (2) des Zylinders (22) aus sich kreuzenden, wendelförmig entlang der Mantelfläche ansteigenden Regalböden gebildet werden.

24. Vorrichtung nach einem der vorhergehenden Vorrichtungsansprüche,
**dadurch gekennzeichnet, dass**
die Regalmulden (2) des Zylinders (22) aus übereinander liegenden Scheiben gebildet werden, deren Umfangsränder V-förmige Vertiefungen aufweisen.

25. Vorrichtung nach einem der vorhergehenden Vorrichtungsansprüche,
**dadurch gekennzeichnet, dass**
die Regal-Vorderfront (4) aus mindestens einer ebenen und senkrechten Fläche besteht.

26. Vorrichtung nach einem der vorhergehenden Vorrichtungsansprüche,
**dadurch gekennzeichnet, dass**
der Manipulator (3) mit seiner Führungssäule (16) ortsfest im Zwickel (23) zwischen mindestens zwei Zylindern (22) angeordnet ist.

27. Vorrichtung nach einem der vorhergehenden Vorrichtungsansprüche,
**dadurch gekennzeichnet, dass**
der Manipulator (3) derart angeordnet ist, dass ein Regal mit einer ebenen Regal-Vorderfront und/oder ein Zylinder-Regal bedienbar ist.

## Claims

1. A method for storage of piece goods (5,5',5"), in the following items, in, respectively retrieval of items (5,5',5") from, a rack by means of a goods hold (1) of a manipulator (3) which is moveable parallel and transverse relative to the rack, with the rack being provided with a rack shelf having a not plane surface, respectively bearing area, and at a defined position a shelf trough (2) having an opening (8, 17) in which trough the item is placed at disposal, and opposite which the goods hold (1) is conveyed from the rack front (4) through the opening (8,17) under the item and lifted in such a manner that the item together with the goods hold (1) is moved forward out of the rack,
**wherein**
- the item (5,5',5") is placed at disposal in the preferably V-shaped shelf trough (2) in such a manner that the item (5,5'5") is centered in longitudinal or circumferential direction of the rack, and
- the goods hold (1) is conveyed under the item (5,5'5") through a multiplicity of recesses and/or openings (17) provided in the region of the shelf troughs (2) and is lifted in such a manner that the item (5,5',5") comes to rest on the goods hold(1).

2. The method according to claim 1,
**wherein**
the goods hold (1) is conveyed under the item (5,5',5") in that the goods hold (1) is pushed horizontally between the shelf trough (2) and the item (5,5',5").

3. The method according to claim 1,
**wherein**
the goods hold (1) is conveyed under the item (5,5',5") in that the goods hold runs up through the shelf trough (2) from below.

4. The method according to one of the preceding claims,
**wherein**
storage occurs inversely to retrieval.

5. The method according to one of the preceding claims,
**wherein**
storage also occurs from the front side of the rack (4).

6. The method according to one of the preceding claims, in particular for storage and retrieval,
**wherein**
the parallel movement between the rack and the manipulator (3) is achieved by moving the rack, in particular by rotating a round rack (22).

7. The method according to one of the preceding claims,
**wherein**
when retrieving several items (5,5',5") which are often required in this combination, the goods hold (1) of the manipulator (3) runs vertically through several shelf troughs (2) in succession.

8. A method according to one of the preceding claims,
**wherein**
in the case of several items (5,5',5") placed in a shelf trough (2) these are placed in such a manner that the items (5,5'5") can slip after the first item to the low point of the shelf trough (2).

9. The method according to claim 8,
**wherein**
the second and subsequent item (5,5',5") follow the item (5,5'5") lying at the lowest point of the shelf trough (2) only in the direction of the, in particular, obliquely rearward rising trough course and, for retrieval, the manipulator (3) is positioned horizontally relative to the item (5,5',5") lying at the lowest point of the trough (2) in such a manner that, in the direction of the rack depth, the free ends of the fingers (10) of the goods hold(1) do not project beyond the rear end of the to-be-received item (5,5'5").

10. The method according to claim 8,
**wherein**
the second and the subsequent item (5,5',5") follow the item (5,5',5") lying at the lowest point of the shelf trough (2) only on one side of the trough course and, for retrieval, the manipulator (3) is positioned horizontally relative to the item (5,5',5") lying at the lowest point of the shelf trough (2) in such a manner that the lateral edge of the manipulator (3) does not project beyond the to-be-received item (5,5'5") in the direction of the second and subsequent item (5,5'5").

11. A device for carrying out the method according to at least one of the method claims
- having a rack which is provided with a rack shelf having a not plane surface respectively not plane bearing area and at least one defined position a shelf trough (2) with an opening (8,17), and
- a manipulator (3) having a goods hold(1) for the storage of items (5, 5', 5")in, respectively the retrieval of items from, the rack, with the goods hold being conveyable through the opening (8,17) under the item (5,5',5") and liftable in such a manner that the item is movable together with the goods hold(1) forward out of the rack,
**wherein**
the shelf trough is designed preferably V-shaped in such a manner that the shelf trough centers the item (5,5',5") in longitudinal or circumferential direction, a multiplicity of recesses and/or openings (8, 17) are provided in the shelf trough and the goods hold(1) is conveyable under the item (5,5',5") and liftable in such a manner that the item (5,5'5") comes to rest on the goods hold(1).

12. The device according to claim 11,
**wherein**
the shelf trough (2) is provided with recesses (17) open to the front and the goods hold(1) comprises fingers (10), whose spacing and dimensions correspond to the recesses (17) of the shelf trough.

13. The device according to one of the preceding device claims,
**wherein**
the shelf trough (2) is provided with slits (8) extending to the front and running completely through the shelf trough (2) and the goods hold(1) of the manipulator (3) comprises fingers (10) whose spacing and dimensions correspond to the slits (8) of shelf trough (2).

14. The device according to one of the preceding device claims,
**wherein**
the manipulator (3) is disposed movable parallel to the rack front (4).

15. The device according to one of the preceding device claims,
**wherein**
a cross section running perpendicular to a bearing area of the shelf trough (2) and/or to the goods hold (1) is designed V-shaped.

16. The device according to one of the preceding device claims,
**wherein**
the shelf trough (2) and/or the goods hold (1) have - in relation to the size of the individual recesses and/or of the individual openings (17) - small-scale bearing points (19).

17. The device according to one of the preceding device claims,
**wherein**
the shelf trough (2) and/or the goods hold (1) is provided with an anti-slip surface.

18. The device according to one of the preceding device claims,
**wherein**
the shelf trough (2) is provided at its front with a stop (9a,18a) for the item (5).

19. The device according to one of the preceding device claims,
**wherein**
the goods hold (1) has various bearing areas (20a,b,c,d) which are borne rotatable about an horizontal axis (14).

20. The device according to one of the preceding device claims,
**wherein**
at least one bearing area (18) of the goods hold (1) is pivotable about a vertical axis, in particular a guide column (16), in such a manner that the main axis of the V-shaped cross section of the bearing area points essentially perpendicular to the rack front (4).

21. The device according to one of the preceding device claims,
**wherein**
the goods hold (1) has a bearing area, in particular in the region of where it meets the guide column (16).

22. The device according to one of the preceding device claims,
**wherein**
the rack is at least one standing, rotatable, in particular, computer-controlled cylinder (22) and the rack front (4) is formed by a cylinder surface of the cylinder.

23. The device according to one of the preceding device claims,
**wherein**
the shelf troughs (2) of the cylinder (22) are formed by crossing, helical-shaped rack shelves rising along the cylinder surface.

24. The device according to one of the preceding device claims,
**wherein**
the shelf troughs (2) of the cylinder (22) are formed by discs lying one above the other, whose circumferential edges are provided with V-shaped recesses.

25. The device according to one of the preceding device claims,
**wherein**
the rack front (4) comprises at least one plane and vertical area.

26. The device according to one of the preceding device claims,
**wherein**
the manipulator (3) with its guide column (16) is disposed stationary in the gusset (23) between at least two cylinders (22).

27. The device according to one of the preceding device claims,
**wherein**
the manipulator (3) is disposed in such a manner that a rack with a plane rack front and/or a cylinder rack is servicable.

## Revendications

1. Procédé pour déstocker de la marchandise en morceaux (5, 5', 5") dans ou à partir d'une étagère au moyen d'un logement de marchandise (1) d'un manipulateur (3) mobile parallèlement ou en travers par rapport à l'étagère, l'étagère présentant un fond d'étagère qui présente une surface supérieure ou surface d'appui non plane et sur une position définie une cavité d'étagère avec un percement, dans laquelle la marchandise est mise à disposition et par rapport à laquelle le logement de marchandise (1) est déplacé à partir de la face avant d'étagères '(4) à travers le percement sous la marchandise et soulevé de telle sorte que la marchandise est déplacée conjointement avec le logement de marchandise (1) vers l'avant à partir de l'étagère,
**caractérisé en ce que**
- la marchandise (5, 5', 5") est mise à disposition dans la cavité d'étagère (2) formée de préférence en V de telle sorte que la marchandise (5, 5', 5") subit un centrage dans la direction longitudinale ou direction périphérique de l'étagère, et
- **en ce que** le logement de marchandise (1) est déplacé à travers un grand nombre de cavités et/ou de percements (17) prévus dans la zone de la cavité d'étagère (2) au-dessous de la marchandise (5, 5', 5") et est soulevé de telle sorte que la marchandise (5, 5', 5") arrive au niveau du logement de marchandise 1.

2. Procédé selon la revendication 1,
**caractérisé en ce que**
- le logement de marchandise (1) est déplacé sous la marchandise (5, 5', 5") par le fait qu'il est introduit horizontalement entre la cavité d'étagère (2) et la marchandise (5, 5', 5").

3. Procédé selon la revendication 1,
**caractérisé en ce que**
le logement de marchandise (1) est déplacé sous la marchandise (5, 5', 5") du fait qu'il traverse la cavité d'étagère (2) du bas vers le haut.

4. Procédé selon l'une quelconque des revendications précédentes,
**caractérisé en ce que**
le stockage s'effectue dans le sens inverse au déstockage.

5. Procédé selon l'une quelconque des revendications précédentes,
**caractérisé en ce que**
le stockage s'effectue également à partir du côté avant de l'étagère (4).

6. Procédé selon l'une quelconque des revendications précédentes, en particulier pour le stockage et le déstockage,
**caractérisé en ce que**
le déplacement parallèle entre l'étagère et le manipulateur (3) est obtenu par le déplacement de l'étagère, en particulier par la rotation d'une étagère (22) ronde.

7. Procédé selon l'une quelconque des revendications précédentes,
**caractérisé en ce que**
lors du déstockage de plusieurs marchandises (5, 5', 5") en morceaux, qui sont utilisées souvent dans cette combinaison, le receveur de marchandise (1) du manipulateur (3) passe à travers plusieurs cavités d'étagère (4) de façon successive et verticalement.

8. Procédé selon l'une quelconque des revendications précédentes,
**caractérisé en ce que**
dans le cas de plusieurs marchandises (5, 5', 5") introduites dans une cavité d'étagère (2), celles-ci sont insérées de telle sorte que les marchandises (5, 5', 5") peuvent glisser en direction du point le plus bas de la cavité d'étagère (2).

9. Procédé selon la revendication 8,
**caractérisé en ce que**
la seconde marchandise et les marchandises suivantes (5, 5', 5") se raccordent seulement en direction du tracé de cavité croissant en particulier de façon inclinée vers l'arrière à la marchandise (5, 5', 5") disposée au point le plus bas de la cavité d'étagère (2) et, pour le déstockage, le manipulateur (3) est positionné horizontalement par rapport à la marchandise (5, 5', 5") située au point le plus bas de la cavité d'étagère (2) de telle sorte que, en direction de la profondeur d'étagère, les extrémités libres des doigts (10) du logement de marchandise (1) ne dépassent pas vers l'arrière de l'extrémité arrière de la marchandise (5, 5', 5") à recevoir.

10. Procédé selon la revendication 8,
**caractérisé en ce que**
la seconde marchandise et les marchandises suivantes (5, 5', 5") font suite seulement sur un côté du tracé de cavité à la marchandise (5, 5', 5") située au point le plus bas de la cavité d'étagère (2) et, pour le déstockage, le manipulateur (3) est positionné horizontalement par rapport à la marchandise (5, 5', 5") située au point le plus bas de la cavité d'étagère (2) de telle sorte que, en direction de la seconde marchandise et des marchandises suivantes (5, 5', 5"), le bord latéral du manipulateur (3) ne dépasse pas la marchandise à recevoir (5, 5', 5").

11. Dispositif pour la mise en oeuvre du procédé selon au moins l'une quelconque des revendications de procédé
- avec une étagère, qui prévoit un fond d'étagère qui présente une surface supérieure ou une surface d'appui non plane et une cavité d'étagère (2) avec un percement sur au moins une position définie, ainsi que
- un manipulateur (3) avec un logement de marchandise (1) pour le stockage et le déstockage de marchandise en morceau dans ou à partir de l'étagère, le logement de marchandise pouvant être déplacé à travers le percement sous la marchandise (5, 5', 5") et pouvant être soulevé de telle sorte que la marchandise peut être déplacée conjointement avec le logement de marchandise (1) vers l'avant à partir de l'étagère,
**caractérisé en ce que** la cavité d'étagère est conçue de telle sorte, de préférence en V, que la cavité d'étagère entraîne un centrage de la marchandise dans le sens longitudinal ou le sens périphérique de l'étagère,
**en ce que**, dans la cavité d'étagère, il est prévu une pluralité de cavités et/ou de percements (17) et que le logement de marchandise (1) peut être déplacé au-dessus de la marchandise (5, 5', 5") et soulevé de telle sorte que la marchandise (5, 5', 5") arrive au niveau du logement de marchandise (1).

12. Dispositif selon l'une quelconque des revendications de dispositif précédentes,
**caractérisé en ce que**
la cavité d'étagère (2) présente des cavités (17) ouvertes en direction de la face avant et le logement de marchandise (1) se compose de doigts (10) dont l'espacement et la dimension correspondent aux creux (17) de la cavité d'étagère (2).

13. Dispositif selon l'une quelconque des revendications de dispositif précédentes,
**caractérisé en ce que**
la cavité d'étagère (2) présente des fentes s'étendant jusqu'à la face avant et traversant complètement la cavité d'étagère (2) et le logement de marchandise (1) du manipulateur (3) se compose de doigts (10) dont l'espacement et la dimension correspondent aux fentes (8) de la cavité d'étagère (2).

14. Dispositif selon l'une quelconque des revendications de dispositif précédentes,
**caractérisé en ce que**
le manipulateur (3) est disposé de façon à pouvoir se déplacer parallèlement à la face avant (4) de l'étagère.

15. Dispositif selon l'une quelconque des revendications de dispositif précédentes,
**caractérisé en ce que**
une section agencée perpendiculairement à une surface d'appui de la cavité d'étagère (2) et/ou du logement de marchandise (1) est conçue en V.

16. Dispositif selon l'une quelconque des revendications de dispositif précédentes,
**caractérisé en ce que**
la cavité d'étagère (2) et/ou le logement d'outil (1) présente des points d'appui (19) de petite surface, par rapport à la grandeur des cavités individuelles et/ou percements (17).

17. Dispositif selon l'une quelconque des revendications de dispositif précédentes,
**caractérisé en ce que**
la cavité d'étagère (2) et/ou le logement de marchandise (1) présente une surface antidérapante.

18. Dispositif selon l'une quelconque des revendications de dispositif précédentes,
**caractérisé en ce que**
la cavité d'étagère (2) présente sur sa face avant une butée (9a, 18a) pour la marchandise (5).

19. Dispositif selon l'une quelconque des revendications de dispositif précédentes,
**caractérisé en ce que**
le logement de marchandise (1) présente différentes surfaces d'appui (20a, b, c, d) qui sont logées de façon rotative autour d'un axe (14) horizontal.

20. Dispositif selon l'une quelconque des revendications de dispositif précédentes,
**caractérisé en ce que**
au moins une surface d'appui (18) du logement de marchandise (1) peut basculer autour d'un axe vertical, en particulier une colonne de direction (16), de telle sorte que l'axe principal de la section en V de la surface d'appui est dirigé sensiblement perpendiculairement à la face avant d'étagère (4).

21. Dispositif selon l'une quelconque des revendications de dispositif précédentes,
**caractérisé en ce que**
le logement de marchandise (1) présente une surface de dépôt, en particulier dans la zone de son rattachement à la colonne de direction (16).

22. Dispositif selon l'une quelconque des revendications de dispositif précédentes,
**caractérisé en ce que**
l'étagère est au moins un cylindre (22) vertical, rotatif, en particulier commandé par ordinateur et la face avant d'étagère (4) est formée par une surface d'enveloppe du cylindre.

23. Dispositif selon l'une quelconque des revendications de dispositif précédentes,
**caractérisé en ce que**
les cavités d'étagère (2) du cylindre (22) sont formées de fond d'étagère se croisant, montant en forme d'hélice le long de la surface d'enveloppe.

24. Dispositif selon l'une quelconque des revendications de dispositif précédentes,
**caractérisé en ce que**
les cavités d'étagère (2) du cylindre (22) sont formées de disques superposés, dont les bords périphériques présentent des cavités en V.

25. Dispositif selon l'une quelconque des revendications de dispositif précédentes,
**caractérisé en ce que**
la face avant d'étagère (4) est formée d'au moins une surface plane et verticale.

26. Dispositif selon l'une quelconque des revendications de dispositif précédentes,
**caractérisé en ce que**
le manipulateur (3) avec sa colonne de guidage (6) est disposé de façon fixe dans le gousset (23) entre au moins deux cylindres (22).

27. Dispositif selon l'une quelconque des revendications de dispositif précédentes,
**caractérisé en ce que**
le manipulateur (3) est disposé de telle sorte qu'une étagère peut être commandée avec une face avant d'étagère plane et/ou une étagère à cylindre.
